# EUROPEAN PATENT SPECIFICATION

(11) **EP 3 546 512 B1**
(45) Date of publication and mention of the grant of the patent: **06.08.2025**
(21) Application number: 17874943.8
(22) Date of filing: 17.11.2017
(51) Int. Cl.: C08K 5/00, C08L 9/00, C08L 9/06, B60C 1/00, C08K 3/04

(54) **RUBBER COMPOSITION FOR TREAD, AND TIRE**
KAUTSCHUKZUSAMMENSETZUNG FÜR LAUFFLÄCHE UND REIFEN
COMPOSITION DE CAOUTCHOUC POUR BANDE DE ROULEMENT, ET PNEU

(30) Priority: 24.11.2016 JP 2016228126
(43) Date of publication of application: 02.10.2019
(73) Proprietor: Sumitomo Rubber Industries, Ltd., Kobe-shi, Hyogo 651-0072 (JP)
(72) Inventor: HIMEDA, Shingo, Kobe-shi Hyogo 651-0072 (JP)
(74) Representative: TBK
(86) International application number: PCT/JP2017/041539
(87) International publication number: WO 2018/097066

(56) References cited:
- EP-A1- 2 578 626
- JP-A- 2000 211 313
- JP-A- 2000 219 778
- JP-A- 2015 164 985
- JP-A- 2015 206 029
- JP-A- S57 207 629
- JP-A- S6 061 313
- US-A- 5 225 011
- US-A1- 2012 053 263

## Description

### TECHNICAL FIELD

The present invention relates to a tire having a tread composed of a specific rubber composition.

### BACKGROUND ART

In some tires, especially, tires for heavy loads, such as those of trucks and buses, and tires for running on rugged terrains, a tread surface is provided with independent blocks enclosed by a tread pattern (grooves). These blocks contribute to transmission of driving force and braking force, steering stability on snow, muddy road surface, etc., and improvement of drainage. However, chipping of blocks is apt to arise due to running on rough roads and aged deterioration. If the block is chipped off, the tire has difficulty in exhibiting its inherent performance.

Patent Document 1 describes a rubber composition for a tread that has improved block chipping resistance by containing crystallized carbon black which has been crystallized, but there is room for improvement.

### PRIOR ART DOCUMENT

### Patent Document

Patent Document 1: JP 2014-024890 A
Further, US 2012/053263 A1 discloses a rubber composition for a base tread. US 5225011 A discloses a tire of superior cut resistance comprising a tread with steel cord belts in which a center rubber for middle part of the tread, and in which an inner portion of the center rubber is composed of a rubber composition comprising carbon black of large iodine absorption number. JP 2015-206029 A, JP 2000-219778 A, JP 2015-164985 A and JP S60-61313 A disclose rubber compositions for tire tread and JP S57-207629 A as well as JP 2000-211313 A disclose further rubber compositions.

### SUMMARY OF THE INVENTION

### PROBLEM TO BE SOLVED BY THE INVENTION

An object of the present invention is to provide tire having a tread composed of a rubber composition for a tread having good in block chipping resistance.

### MEANS TO SOLVE THE PROBLEM

The present invention relates to a tire having a tread,
wherein the surface of the tread is provided with independent blocks enclosed by a tread pattern (grooves), and
wherein the tread is composed of a rubber composition, comprising:
   20 to 38 parts by mass of carbon black having an iodine adsorption amount of 130 mg/g or more, based on 100 parts by mass of a rubber component,
   the rubber component comprising:
      15 to 30% by mass of a styrene-butadiene rubber having a styrene content of 15% by mass or less and a vinyl content of 30 to 45 mol%;
      40 to 58% by mass of an isoprene-based rubber; and 20 to 40% by mass of a butadiene rubber, wherein, when a content of the styrene-butadiene rubber is defined as X parts by mass, a content of the carbon black is 0.8X to 2.5X parts by mass,
      the rubber composition further comprising 0.2X parts by mass or less of a softening agent.

Further beneficial embodiments are set forth in the dependent claims, wherein the softening agent means a component soluble in acetone.

### EFFECTS OF THE INVENTION

The tire having a tread composed of the rubber composition for a tread according to the present invention (in the following sometimes simply referred to as "rubber composition of the present invention") is good in block chipping resistance.

### EMBODIMENT FOR CARRYING OUT THE INVENTION

A rubber composition for a tread of the tire according to an embodiment of the present invention is characterized by containing respective predetermined amounts of a rubber component, fine-particle carbon black, and a softening agent, the rubber component comprising a predetermined styrene-butadiene rubber, an isoprene-based rubber, and a butadiene rubber.

In the rubber composition for a tread according to the present embodiment, the styrene-butadiene rubber is dispersed into the isoprene and butadiene polymers, thereby alleviating the shock generated on the tire while running on a road in a bad condition. Furthermore, by using a styrene-butadiene rubber having a low styrene content (low-styrene SBR) as the styrene-butadiene rubber and the fine-particle carbon black, the contact between the SBR and the carbon black is enhanced, thus improving the reinforcing effect on the rubber composition. Moreover, because of the small content of the softening agent, it is considered that the rubber composition achieves the good block chipping resistance without impairing the improved reinforcing effect. In addition, because of the small styrene content in the SBR, it is also considered that the amount of heat generated from the rubber component becomes small, thereby making it possible to suppress reduction in the block rigidity of the tire due to running, whereby the rubber composition has improved block chipping resistance in a synergistic manner.

The rubber component comprises a predetermined styrene-butadiene rubber having a low styrene content (low-styrene SBR), isoprene-based rubber, and butadiene rubber (BR).

The styrene content in the low-styrene SBR is 15% by mass or less, and preferably 12% by mass or less. When the styrene content exceeds 15% by mass, heat generation is increased, and consequently the fuel efficiency of the tire tends to deteriorate. Further, the styrene content is preferably 2% by mass or more, more preferably 5% by mass or more, and still more preferably 8% by mass or more, on the grounds that the effects of the present invention can be sufficiently obtained. It is noted that the styrene content in the SBR as used herein is calculated by H¹-NMR measurement.

The vinyl content in the low-styrene SBR is 30 mol% or more, preferably 33 mol% or more, and more preferably 35 mol% or more. When the vinyl content is less than 30 mol%, the wet grip performance of the tire tends to deteriorate. On the other hand, the vinyl content is 50 mol% or less, preferably 48 mol% or less, and more preferably 45 mol% or less. When the vinyl content exceeds 50 mol%, there is a tendency that heat generation is increased.

The weight average molecular weight (Mw) of the low-styrene SBR is preferably 100,000 or more, more preferably 150,000 or more, and still more preferably 250,000 or more from the viewpoints of grip performance and abrasion resistance performance of the tire. On the other hand, the Mw of the low-styrene SBR is preferably 2,000,000 or less, and more preferably 1,000,000 or less from the viewpoint of its cross-linking uniformity and the like. It is noted that Mw can be determined in terms of standard-polystyrene based on measured values by gel permeation chromatography (GPC) (GPC-8000 series manufactured by Tosoh Corporation, detector: differential refractometer, and column: TSKGEL SUPERMALTPORE HZ-M manufactured by Tosoh Corporation).

The low-styrene SBR is not particularly limited, and examples thereof include a solution-polymerized SBR (S-SBR), an emulsion-polymerized SBR (E-SBR), modified SBRs thereof (modified S-SBR, and modified E-SBR), and the like. The modified SBRs include a SBR with its end and/or main chain modified, and a modified SBR (a condensate, a branched structure, and the like) coupled with tin, a silicon compound, etc. Among these, S-SBR is preferable.

Examples of the S-SBR usable in the present embodiment include S-SBRs manufactured and sold by JSR Corporation, Sumitomo Chemical Co., Ltd., Ube Industries, Ltd., Asahi Kasei Corporation, Zeon Corporation, and the like.

The content of the low-styrene SBR in the rubber component is 15% by mass or more, preferably 18% by mass or more, and more preferably 20% by mass or more. When the content of the low-styrene SBR is less than 15% by mass, the block chipping resistance of the tire tends to become insufficient. Further, the content of the low-styrene SBR is 30% by mass or less, and preferably 28% by mass or less. When the content of the low-styrene SBR exceeds 30% by mass, there is a tendency that heat generation is increased.

Examples of the isoprene-based rubber include a natural rubber (NR), modified natural rubbers, such as an epoxidized natural rubber (ENR), a hydrogenated natural rubber (HNR), a deproteinized natural rubber (DPNR), and a high-purity natural rubber (UPNR), and an isoprene rubber (IR). As the NR, for example, SIR20, RSS#3, TSR20 or the like can be used, and as the IR, an IR commonly used in the tire industry or the like can be used.

The content of the isoprene-based rubber in the rubber component is 40% by mass or more, preferably 45% by mass or more, and more preferably 50% by mass or more. When the content of the isoprene-based rubber is less than 40% by mass, the effects of the present invention tends to become insufficient. Further, the content of the isoprene-based rubber is 58% by mass or less. When the content of the isoprene-based rubber exceeds 60% by mass, the resistance to crack growth of the rubber component tends to deteriorate.

The BR is not particularly limited, and examples thereof includes a high-cis BR having a cis-1,4 bond content of 90% or more, a modified BR with its end and/or main chain modified, a BR containing 1,2-syndiotactic polybutadiene crystals (SPB) (i.e., BR containing SPB), and a modified BR (a condensate, a branched structure, and the like) coupled with tin, a silicon compound, etc. Among these BRs, the high-cis BR is preferable because of its good abrasion resistance.

Examples of the high-cis BR that can be used in one embodiment of the present invention include high-cis BRs manufactured and sold by JSR Corporation, Sumitomo Chemical Co., Ltd., Ube Industries, Ltd., Asahi Kasei Corporation, Zeon Corporation, and the like.

The BR content in the rubber component is 20% by mass or more, and preferably 25% by mass or more. When the BR content is less than 20% by mass, the effects of the present invention tends to become insufficient. Further, the BR content is 40% by mass or less, and preferably 35% by mass or less. When the BR content exceeds 40% by mass, the block chipping resistance of the tire tends to deteriorate.

In one embodiment of the present invention, the rubber component may comprise rubber components other than the above-mentioned low-styrene SBR, isoprene-based rubber, and BR. Examples of the other rubber components include a SBR other than the low-styrene SBR, a styrene-isoprene-butadiene copolymer rubber (SIBR), a styrene-isobutylene-styrene block copolymer (SIBS), and the like. These other rubber components may be used alone or may be used in combination of two or more thereof.

The iodine adsorption amount of the fine-particle carbon black is 130 mg/g or more, preferably 135 mg/g or more, and more preferably 140 mg/g or more. When the iodine adsorption amount is less than 130 mg/g, the block chipping resistance of the tire tends to become insufficient. The upper limit of the iodine adsorption amount is not particularly limited, but is preferably 180 mg/g or less, more preferably 160 mg/g or less, and still more preferably 150 mg/g or less from the viewpoint of processability.

The content of the fine-particle carbon black based on 100 parts by mass of the rubber component is 20 parts by mass or more, preferably 25 parts by mass or more, and more preferably 30 parts by mass or more. When the content of the fine-particle carbon black is less than 20 parts by mass, the block chipping resistance of the tire tends to become insufficient. Further, the content of the fine-particle carbon black is 38 parts by mass or less. When the content of the fine-particle carbon black exceeds 40 parts by mass, there is a tendency that heat generation is increased.

Furthermore, when the content of the low-styrene SBR is defined as X parts by mass, the content of the fine-particle carbon black is 0.8X to 2.5X parts by mass, and preferably 1.0X to 2.0X parts by mass. By setting the content of the fine-particle carbon black based on the content of the low-styrene SBR within the above-mentioned range, the effect made by the combination use of the low-styrene SBR and the fine-particle carbon black is further exhibited.

The softening agent means a component soluble in acetone, and examples thereof include oils, such as a process oil and a vegetable oil and fat, a liquid diene-based polymer, and the like. These softening agents may be used alone or may be used in combination of two or more thereof. Among these, oil is preferable.

Examples of the oil include process oils, vegetable oils and fats, mixtures thereof, and the like. Examples of the process oil include a paraffinic process oil, a naphthenic process oil, an aromatic process oil (aroma oil), and the like. Examples of the vegetable oil and fat include a castor oil, a cottonseed oil, a linseed oil, a canola oil, a soybean oil, a palm oil, a coconut oil, a peanut oil, a rosin, a pine oil, a pine tar, a tall oil, a corn oil, a rice bran oil, a safflower oil, a sesame oil, an olive oil, a sunflower oil, a palm kernel oil, a camellia oil, a jojoba oil, a macadamia nut oil, a tung oil, and the like. Among these, aroma oil is preferable.

The liquid diene-based polymer is not particularly limited as long as it is a diene-based polymer having a weight average molecular weight of 50,000 or less, and examples thereof include a styrene-butadiene copolymer (rubber), a butadiene polymer (rubber), an isoprene polymer (rubber), an acrylonitrile-butadiene copolymer (rubber), and the like. Among the liquid diene-based polymers, a liquid styrene-butadiene copolymer (liquid styrene-butadiene rubber (liquid SBR)) is preferable because of its good performance on snow and ice. In addition, a liquid butadiene polymer (liquid butadiene rubber (liquid BR)) is preferable because of its significant effect of improving the abrasion resistance performance.

The weight average molecular weight (Mw) of the liquid diene-based polymer is preferably 1000 or more, and more preferably 1500 or more, because its good effect of improving the abrasion resistance. In addition, from the viewpoint of the performance on snow and ice, the weight average molecular weight of the liquid diene-based polymer is preferably 50,000 or less, more preferably 20,000 or less, and still more preferably 15,000 or less. It is noted that the weight average molecular weight (Mw) as used herein can be determined in terms of standard-polystyrene based on measured values by gel permeation chromatograph (GPC) (GPC-8000 series manufactured by Tosoh Corporation, detector: differential refractometer, column: TSKGEL SUPERMULTIPORE HZ-M manufactured by Tosoh Corporation).

When the content of the low-styrene SBR is defined as X parts by mass, the content of the softening agent is 0.2X parts by mass or less. When the content of the softening agent exceeds 0.5X parts by mass, the block chipping resistance of the tire tends to become insufficient. On the other hand, the content of the softening agent is preferably 0.05X parts by mass or more, and more preferably 0.1X parts by mass or more from the viewpoint of processability.

The content of the softening agent based on 100 parts by mass of the rubber component is preferably 1 part by mass or more, and more preferably 2 parts by mass or more from the viewpoint of processability. On the other hand, the content of the softening agent is preferably 10 parts by mass or less, and more preferably 6 parts by mass or less from the viewpoints of the block chipping resistance and abrasion resistance performance of the tire.

The rubber composition for a tread according to one embodiment of the present invention may contain, in addition to the above-mentioned components, compounding components generally used for manufacturing a rubber composition, for example, a filler other than the above-mentioned fine-particle carbon black (other fillers), zinc oxide, stearic acid, an antiaging agent, a processing aid, wax, a vulcanizing agent, a vulcanization accelerator, and the like, as appropriate.

The other fillers are not particularly limited, and examples thereof include carbon black (other carbon black) having an iodine adsorption amount of less than 130 mg/g, silica, aluminum hydroxide, alumina (aluminum oxide), calcium carbonate, talc, and the like. These fillers may be used alone or may be used in combination of two or more thereof.

The other carbon black is not particularly limited as long as the iodine adsorption amount thereof is less than 130 mg/g, and examples thereof include ISAF, HAF, FF, FEF, GPF, SRF-LM, and the like, which are generally used as reinforcing fillers in the tire industry.

When the rubber composition comprises the other carbon black(s), the content thereof is preferably 10 parts by mass or more, and more preferably 15 parts by mass or more based on 100 parts by mass of the rubber component, on the grounds that the sufficient reinforcing property can be obtained. On the other hand, the content of the other carbon black(s) is preferably 80 parts by mass or less, and more preferably 70 parts by mass or less from the viewpoint of crack resistance (durability) of the tire.

The silica is not particularly limited, and examples thereof include dry-type silica (anhydrous silicic acid), wet-type silica (hydrous silicic acid), and the like. Hydrous silicic acid prepared by a wet method is preferred for the reason that many silanol groups are contained.

The nitrogen adsorption specific surface area (N₂SA) of the silica is preferably 80 m²/g or more, and more preferably 100 m²/g or more from the viewpoint of durability and elongation at breakage of the tire. In addition, the N₂SA of the silica is preferably 250 m²/g or less, and more preferably 220 m²/g or less from the viewpoint of fuel efficiency and processability. It is noted that the N₂SA of the silica as used herein is a value measured in accordance with ASTM D3037-93.

When the rubber composition comprises the silica, the content thereof is preferably 5 parts by mass or more, and more preferably 10 parts by mass or more based on 100 parts by mass of the rubber component from the viewpoints of durability and elongation at breakage of the tire. On the other hand, the silica content is preferably 200 parts by mass or less, and more preferably 150 parts by mass or less, from the viewpoints of improving dispersibility thereof during kneading and suppressing deterioration in the processability thereof due to re-agglomeration of silica particles when heating the rubber composition during a rolling process or when storing it after the rolling process.

The silica is preferably used in combination with a silane coupling agent. As the silane coupling agent, any silane coupling agent conventionally used in combination with silica in the rubber industry can be used. Examples of the silane coupling agent include sulfide-based silane coupling agents, such as bis(3-triethoxysilylpropyl) disulfide, bis(3-triethoxysilylpropyl)tetrasulfide; mercapto-based silane coupling agents (silane coupling agents each having a mercapto group), such as 3-mercaptopropyltrimethoxysilane, NXT-Z 100, NXT-Z45, NXT, etc., manufactured by Momentive Performance Materials Inc.; vinyl-based silane coupling agents, such as vinyl triethoxysilane; amino-based silane coupling agents, such as 3-aminopropyl triethoxysilane; glycidoxy-based silane coupling agents, such as γ-glycidoxypropyltriethoxysilane; nitro-based silane coupling agents, such as 3-nitropropyltrimethoxysilane; chloro-based silane coupling agents, such as 3-chloropropyltrimethoxysilane; and the like. These silane coupling agents may be used alone or in combination.

When the rubber composition comprises the silane coupling agent, the content thereof is preferably 4.0 parts by mass or more, and more preferably 6.0 parts by mass or more based on 100 parts by mass of silica, on the grounds that the effects of sufficiently improving filler dispersibility and reducing the viscosity of the rubber composition and the like can be obtained. On the other hand, the content of the silane coupling agent is preferably 12 parts by mass or less, and more preferably 10 parts by mass or less, because otherwise the sufficient coupling effect and silica dispersion effect would not be obtained and the reinforcing property would be deteriorated.

The antioxidant is not particularly limited, and any antioxidant used in the field of rubber can be used. Examples of the antiaging agent include quinoline-based, quinone-based, phenol-based, phenylenediamine-based antiaging agents and the like.

When the rubber composition comprises the antioxidant, the content thereof is preferably 0.5 parts by mass or more, and more preferably 0.8 parts by mass or more based on 100 parts by mass of the rubber component. On the other hand, the content of the antioxidant is preferably 2.0 parts by mass or less, more preferably 1.5 parts by mass or less, and still more preferably 1.2 parts by mass or less from the viewpoints of dispersibility of the filler and the like, elongation at breakage of the tire, and kneading efficiency of the rubber composition.

Examples of the processing aid include fatty acid metal salts, such as zinc stearate. Specifically, fatty acid soap-based processing aids, such as EF44 and WB16 manufactured by Schill & Seilacher Struktol GmbH, can be used. The content of the processing aid is preferably 0.1 parts by mass or more, and is also preferably 5 parts by mass or less, and particularly preferably 3 parts by mass or less, based on 100 parts by mass of the total rubber component.

When the rubber composition comprises the stearic acid, the content thereof is preferably 0.2 parts by mass or more, and more preferably 1 part by mass or more based on 100 parts by mass of the rubber component, from the viewpoint of the vulcanization rate. Further, from the viewpoint of processability, the content of the stearic acid is preferably 10 parts by mass or less, and more preferably 5 parts by mass or less.

When the rubber composition comprises the zinc oxide, the content thereof is preferably 0.5 parts by mass or more, and more preferably 1 part by mass or more based on 100 parts by mass of the rubber component, from the viewpoint of the vulcanization rate. Further, from the viewpoint of the abrasion resistance performance, the zinc oxide content is preferably 10 parts by mass or less, and more preferably 5 parts by mass or less.

When the rubber composition comprises the wax, the content thereof is preferably 0.5 parts by mass or more, and more preferably 1 part by mass or more based on 100 parts by mass of the rubber component, from the viewpoint of weather resistance of the rubber. In addition, from the viewpoint of preventing whitening of a tire due to blooming of the wax, the content of the wax is preferably 10 parts by mass or less, and more preferably 5 parts by mass or less.

Sulfur is suitably used as the vulcanizing agent. As the sulfur, powdered sulfur, oil-treated sulfur, precipitated sulfur, colloidal sulfur, insoluble sulfur, highly dispersible sulfur, or the like can be used.

When the rubber composition comprises the sulfur as the vulcanizing agent, the content thereof is preferably 0.5 parts by mass or more based on 100 parts by mass of the rubber component from the viewpoint of the grip performance and abrasion resistance performance of the tire. Further, from the viewpoint of deterioration in the quality of the tire, the content of the sulfur is preferably 3 parts by mass or less.

Examples of the vulcanizing agent other than sulfur, include vulcanizing agents containing sulfur atoms, such as Tackirol V200 manufactured by Taoka Chemical Co., Ltd., DURALINK HTS (1,6-hexamethylene-sodium dithiosulfate dihydrate) manufactured by Flexis AG, and KA9188
(1,6-bis(N,N'-dibenzylthiocarbamoyldithio)hexane) manufactured by LANXESS AG, and organic peroxides, such as dicumyl peroxide.

Examples of the vulcanization accelerator include sulfenamide-based, thiazole-based, thiuram-based, thiourea-based, guanidine-based, dithiocarbamic acid-based, aldehyde-amine-based, aldehyde-ammonia-based, imidazoline-based, xanthate-based vulcanization accelerators, and the like. These vulcanization accelerators may be used alone or may be used in combination of two or more thereof. Among these, sulfenamide-based, thiazole-based, and guanidine-based vulcanization accelerators are preferable.

Examples of the sulfenamide-based vulcanization accelerator include N-tert-butyl-2-benzothiazolylsulfenamide (TBBS), N-cyclohexyl-2-benzothiazolylsulfenamide (CBS),
N,N-dicyclohexyl-2-benzothiazolylsulfenamide (DCBS), and the like.

Examples of the thiazole-based vulcanization accelerator include 2-mercaptobenzothiazole, cyclohexylamine salts of 2-mercaptobenzothiazole, di-2-benzothiazolyl disulfide and the like.

Examples of the guanidine-based vulcanization accelerator include 1,3-diphenylguanidine, 1,3-di-o-tolylguanidine, 1-o-tolylbiguanide, di-o-tolylguanidine salts of dicatecholborate, 1,3-di-o-cumenylguanidine, 1,3-di-o-biphenylguanidine, 1,3-di-o-cumenyl-2-propionylguanidine, and the like.

When the rubber composition comprises the vulcanization accelerator, the content thereof is preferably 0.5 parts by mass or more, and more preferably 1.0 part by mass or more based on 100 parts by mass of the rubber component, from the viewpoint of ensuring a sufficient vulcanization rate. Further, from the viewpoint of suppressing the blooming, the content of the vulcanization accelerator is preferably 10 parts by mass or less, and more preferably 5 parts by mass or less.

The rubber composition for a tread according to one embodiment of the present invention can be produced by any general method. For example, the rubber composition for a tread can be produced by kneading the components, other than the crosslinking agent and the vulcanization accelerator, among the above-mentioned components with a known kneading machine, which is used in the general rubber industry, such as a Banbury mixer, a kneader, or an open roll, and then further kneading them while adding the crosslinking agent and the vulcanization accelerator thereto, followed by vulcanizing the kneaded components.

A tire according to another embodiment of the present invention can be produced using the above-mentioned rubber composition for a tread by a normal method. That is, the above-mentioned rubber composition that has the above compounding agents compounded in the rubber component as appropriate is extruded along the shape of a tread, then laminated with other tire members on a tire molding machine, and molded by a normal method to thereby form an unvulcanized tire, finally followed by heating and pressurizing the unvulcanized tire in a vulcanizer. In these ways, the tire can be produced.

### EXAMPLE

Although the present invention will be specifically described on the basis of examples, the present invention is not limited only to these examples.

Hereinafter, various types of chemicals used in Examples and Comparative examples are described.
NR: TSR20
SBR1: non-oil extended solution-polymerized SBR (weight average
molecular weight: 250,000, styrene content: 10% by mass, vinyl
content: 40 mol%)
SBR2: non-oil extended emulsion-polymerized SBR (weight average
molecular weight: 450,000, styrene content: 24% by mass, vinyl
content: 17 mol%)
BR: UBEPOL BR150B (high-cis BR, cis-1,4 bond content: 96%) manufactured by Ube Industries, Ltd.
Carbon black 1: Show Black N110 (iodine adsorption amount: 145 mg/g) manufactured by Cabot Japan K.K.
Carbon black 2: Show Black N220 (iodine adsorption amount: 121 mg/g) manufactured by Cabot Japan K.K.
Wax: Ozoace 355 manufactured by Nippon Seiro Co., Ltd.
Antioxidant: NOCRAC 6C
(N-(1,3-dimethylbutyl)-N'-phenyl-p-phenylenediamine) manufactured by Ouchi Shinko Chemical Industrial Co., Ltd.
Stearic acid: "Tsubaki" bead stearic acid manufactured by NOF CORPORATION
Zinc oxide: zinc oxide #2 manufactured by Mitsui Mining & Smelting Co., Ltd.
Oil: TDAE oil manufactured by Japan Energy Corporation
Sulfur: powdered sulfur manufactured by Tsurumi Chemical Industry Co., Ltd.
Vulcanization accelerator: Nocceler NS (N-tert-butyl-2-benzothiazolyl sulfenamide (TBBS) manufactured by Ouchi Shinko Chemical Industrial Co., Ltd.

### Examples and Comparative examples

According to the compounding formulations shown in Table 1, chemicals other than sulfur and a vulcanization accelerator were kneaded up to a discharge temperature of 170°C for 5 minutes using a 1.7L closed Banbury mixer to obtain a kneaded material. Further, the obtained kneaded material was kneaded again (remilled) by the Banbury mixer at a discharge temperature of 150°C for 4 minutes. Then, sulfur and a vulcanization accelerator were added to the obtained kneaded material using a biaxial open roll, and kneaded together up to 105°C for 4 minutes to obtain an unvulcanized rubber composition. The obtained unvulcanized rubber composition was press-vulcanized at 170°C for 12 minutes to thereby prepare a test rubber composition.

In addition, the unvulcanized rubber composition was extruded into the shape of a tire tread by an extruder having a base with a predetermined shape, laminated with other tire members to form an unvulcanized tire, and press-vulcanized, thereby producing a test tire (size: 12R22.5, a tire for truck and bus).

Then, the obtained unvulcanized rubber compositions, vulcanized rubber compositions, and test tires were evaluated for the following characteristics. Evaluation results are shown in Table 1.

### Block chipping resistance index

Each test tire was installed on all wheels of a vehicle (truck), and graded by visual observation of the state of block chipping on the tire after running the distance of 8000 km. The result of the block chipping resistance index is indicated by an index based on the following calculation formula on the assumption that the score of Comparative example 1 is 100. It shows that the larger the numerical value of the index is, the less the block chipping occurs and the higher the block chipping resistance is. (Block chipping resistance index) = (Score of each formulation) / (Score of Comparative example 1) × 100

### Heat build-up characteristic index

The loss tangent (tan δ) of each vulcanized rubber composition was measured using a viscoelastic spectrometer VES manufactured by Iwamoto Corporation under the conditions of the temperature of 70°C, the initial strain of 10%, the dynamic strain of 2%, and the frequency of 10 Hz. The result of the heat build-up characteristic index is indicated by an index based on the following calculation formula on the assumption that the tan δ of Comparative example 1 is 100. It shows that the larger the heat build-up characteristic index, the better the fuel efficiency of the tire becomes. (Heat build-up characteristic index) = (tan δ of each Comparative example 1)/(tan δ of each formulation) × 100

**Table 1**

| | | Example | | | |
|---|---|---|---|---|---|
| | | 1* | 2 | 3 | 4* |
| Compounding amount (part by mass) | | | | | |
| | NR | 55 | 55 | 55 | 55 |
| | SBR 1 | 15 | 25 | 25 | 15 |
| | SBR 2 | - | - | | |
| | BR | 30 | 20 | 20 | 30 |
| | Carbon black 1 | 35 | 35 | 20 | 20 |
| | Carbon black 2 | 20 | 20 | 35 | 35 |
| | Wax | 1.0 | 1.0 | 1.0 | 1.0 |
| | Antioxidant | 2.0 | 2.0 | 2.0 | 2.0 |
| | Stearic acid | 2.0 | 2.0 | 2.0 | 2.0 |
| | Zinc oxide | 3.0 | 3.0 | 3.0 | 3.0 |
| | Oil | 4.0 | 4.0 | 4.0 | 6.0 |
| | Sulfur | 1.5 | 1.5 | 1.5 | 1.5 |
| | Vulcanization accelerator | 1.5 | 1.5 | 1.5 | 1.5 |

| Evaluation | | | | | |
|---|---|---|---|---|---|
| | Block chipping resistance | 102 | 106 | 103 | 101 |
| | Heat build-up characteristic | 105 | 99 | 103 | 105 |

| | | | | | |
|---|---|---|---|---|---|
| * Reference Example | | | | | |

| | | Comparative Example | | | |
|---|---|---|---|---|---|
| | | 1 | 2 | 3 | 4 |
| Compounding amount (part by mass) | | | | | |
| | NR | 55 | 55 | 55 | 55 |
| | SBR 1 | - | - | - | 35 |
| | SBR 2 | 15 | 15 | 15 | - |
| | BR | 30 | 30 | 30 | 10 |
| | Carbon black 1 | 35 | - | - | 35 |
| | Carbon black 2 | 20 | 55 | 55 | 20 |
| | Wax | 1.0 | 1.0 | 1.0 | 1.0 |
| | Antioxidant | 2.0 | 2.0 | 2.0 | 2.0 |
| | Stearic acid | 2.0 | 2.0 | 2.0 | 2.0 |
| | Zinc oxide | 3.0 | 3.0 | 3.0 | 3.0 |
| | Oil | 4.0 | 10.0 | 10.0 | 4.0 |
| | Sulfur | 1.5 | 1.5 | 1.5 | 1.5 |
| | Vulcanization accelerator | 1.5 | 1.5 | 1.5 | 1.5 |

| Evaluation | | | | | |
|---|---|---|---|---|---|
| | Block chipping resistance | 100 | 89 | 89 | 110 |
| | Heat build-up characteristic | 100 | 102 | 102 | 89 |

As can be seen from the results shown in Table 1, the tire having the tread composed of the rubber composition for a tread according to the present invention exhibited good block chipping resistance, on the grounds that the rubber composition comprising respective predetermined amounts of the rubber component, the fine-particle carbon black, and the softening agent, the rubber component comprising the predetermined styrene-butadiene rubber, the isoprene-based rubber, and the butadiene rubber. In addition, each rubber composition of Examples also totally improved its block chipping resistance and heat build-up characteristic.

## Claims

1. A tire having a tread,
wherein the surface of the tread is provided with independent blocks enclosed by a tread pattern (grooves), and
wherein the tread is composed of a rubber composition, comprising:
20 to 38 parts by mass of carbon black having an iodine adsorption amount of 130 mg/g or more, based on 100 parts by mass of a rubber component,
the rubber component comprising: 15 to 30% by mass of a styrene-butadiene rubber having a styrene content of 15% by mass or less and a vinyl content of 30 to 45 mol%; 40 to 58% by mass of an isoprene-based rubber; and 20 to 40% by mass of a butadiene rubber,
wherein, when a content of the styrene-butadiene rubber is defined as X parts by mass, a content of the carbon black is 0.8X to 2.5X parts by mass,
the rubber composition further comprising 0.2X parts by mass or less of a softening agent, wherein the softening agent means a component soluble in acetone.

2. The tire according to claim 1 wherein the rubber composition further comprises 1 part by mass or more and 10 parts by mass or less of a zinc oxide, based on 100 parts by mass of the rubber component.

## Patentansprüche

1. Reifen mit einer Lauffläche,
wobei die Oberfläche der Lauffläche mit unabhängigen Blöcken versehen ist, die von einem Laufflächenprofil (Rillen) umschlossen sind, und
wobei die Lauffläche aus einer Kautschukzusammensetzung aufgebaut ist, die umfasst:
20 bis 38 Masseteile Kohleschwarz mit einer Iodadsorptionsmenge von 130 mg/g oder mehr, bezogen auf 100 Masseteile eines Kautschukbestandteils,
wobei der Kautschukbestandteil umfasst: 15 bis 30 Masse-% eines Styrol-Butadien-Kautschuks mit einem Styrolgehalt von 15 Masse-% oder weniger und einem Vinylgehalt von 30 bis 45 Mol-%; 40 bis 58 Masse-% eines Kautschuks auf Isoprenbasis; und 20 bis 40 Masse-% eines Butadien-Kautschuks,
wobei, wenn ein Gehalt des Styrol-Butadien-Kautschuks als X Masseteile definiert ist, dann ist ein Gehalt des Kohleschwarz 0,8X bis 2,5X Masseteile,
wobei die Kautschukzusammensetzung ferner 0,2X Masseteile oder weniger eines Weichmachers umfasst, wobei der Weichmacher eine in Aceton lösliche Komponente bedeutet.

2. Reifen nach Anspruch 1, wobei die Kautschukzusammensetzung ferner 1 Masseteil oder mehr und 10 Masseteile oder weniger eines Zinkoxids, bezogen auf 100 Masseteile des Kautschukbestandteils, umfasst.

## Revendications

1. Pneu ayant une bande de roulement,
dans lequel la surface de la bande de roulement est pourvue de blocs indépendants entourés d'un motif de bande de roulement (rainures), et
dans lequel la bande de roulement est composée d'une composition de caoutchouc, comprenant :
20 à 38 parties en masse de noir de carbone ayant une quantité d'adsorption d'iode de 130 mg/g ou plus, sur la base de 100 parties en masse d'un composant de caoutchouc,
le composant de caoutchouc comprenant : 15 à 30 % en masse d'un caoutchouc styrène-butadiène ayant une teneur en styrène de 15 % en masse ou moins et une teneur en vinyle de 30 à 45 % en moles ; 40 à 58 % en masse d'un caoutchouc à base d'isoprène ; et 20 à 40 % en masse d'un caoutchouc butadiène,
dans lequel, lorsqu'une teneur en caoutchouc styrène-butadiène est définie comme X parties en masse, une teneur en noir de carbone est de 0,8X à 2,5X parties en masse,
la composition de caoutchouc comprenant en outre 0,2X parties en masse ou moins d'un agent adoucissant, dans laquelle l'agent adoucissant désigne un composant soluble dans l'acétone.

2. Pneu selon la revendication 1, dans lequel la composition de caoutchouc comprend en outre 1 partie en masse ou plus et 10 parties en masse ou moins d'un oxyde de zinc, sur la base de 100 parties en masse du composant de caoutchouc.
